(19) Europäisches Patentamt

European Patent Office

Office européen des brevets

(11) **EP 1 046 017 B1**

(12) **EUROPÄISCHE PATENTSCHRIFT**

(45) Veröffentlichungstag und Bekanntmachung des Hinweises auf die Patenterteilung:
**26.11.2003 Patentblatt 2003/48**

(51) Int Cl.7: **G01B 21/00**, F02M 65/00, G01M 19/00

(21) Anmeldenummer: **99926260.3**

(22) Anmeldetag: **17.04.1999**

(86) Internationale Anmeldenummer:
**PCT/DE99/01154**

(87) Internationale Veröffentlichungsnummer:
**WO 00/019168 (06.04.2000 Gazette 2000/14)**

(54) **MESSEN DER WINKELVERTEILUNG EINES FLÜSSIGKEITSSTRAHLS FÜR BRENNSTOFFEINSPRITZVENTIL**

MEASURING THE ANGULAR DISTRIBUTION OF A LIQUID SPRAY PRODUCED BY A FUEL INJECTION VALVE

MESURE DE LA REPARTITION ANGULAIRE D'UN JET DE FLUIDE PRODUIT PAR UNE SOUPAPE D'INJECTION DE CARBURANT

(84) Benannte Vertragsstaaten:
**DE FR GB IT**

(30) Priorität: **29.09.1998 DE 19844602**

(43) Veröffentlichungstag der Anmeldung:
**25.10.2000 Patentblatt 2000/43**

(73) Patentinhaber: **ROBERT BOSCH GMBH**
**70442 Stuttgart (DE)**

(72) Erfinder:
• **SCHOEFFEL, Eberhard**
**D-96049 Bamberg (DE)**
• **SEIDEL, Josef**
**D-96149 Breitengüssbach (DE)**

(56) Entgegenhaltungen:
DE-A- 3 045 401      DE-A- 4 135 580
DE-C- 3 722 059      JP-A- 2 130 260
JP-A- 3 186 768      JP-A- 59 196 969
US-A- 3 459 049      US-A- 5 753 806

• **P.REIMERS ET AL.: "Forschungsbericht 101 Bundesanstalt für Materialprüfung (BAM) Berlin 'Röntgen- und Gammastrahlen Computer-Tomographie" 1. Februar 1984 (1984-02-01), WIRTSCHAFTSVERLAG NW, BREMERHAVEN (DE) XP002115170 Seite 2 - Seite 3; Abbildung 2.2**

**Beschreibung**

Stand der Technik

Die Erfindung betrifft ein Verfahren und eine Vorrichtung zum Messen der Winkelverteilung eines von einem Abspritzelement abgespritzten Flüssigkeitsstrahls, insbesondere eines von einem Brennstoffeinspritzventil abgespritzten Brennstoffstrahls.

Bislang war es zur Messung der Winkelverteilung eines von einem Brennstoffeinspritzventil abgespritzten Brennstoffstrahls üblich, das Brennstoffeinspritzventil über einem zweidimensionalen Feld von Auffanggefäßen anzuordnen, die jeweils einer einzigen Meßkoordinate zugeordnet sind und eine Teilabspritzmenge in einem vorgegebenen Einzugsgebiet um die Meßkoordinate erfassen (DE-A1-41 35 580). Die Auffanggefäße sind beispielsweise mit einer Skalierung versehen, die manuell abgelesen wird oder jedes der Auffanggefäße ist mit einem separaten Sensor verbunden, der die von dem Auffanggefäß erfaßte Teilabspritzmenge elektronisch ermittelt. Die Auffanggefäße sind auf der dem Brennstoffeinspritzventil zugewandten Seite mit einer trichterförmigen Erweiterung mit einer beispielsweise quadratischen Begrenzung versehen, so daß die Auffanggefäße matrixartig dicht an dicht aneinandergereiht werden können. Die Messung von abgespritzten Brennstoffmengen durch Ansammlung in einem Schauglas ist beispielsweise in der Beschreibungseinleitung der DE 195 16 923 A1 beschrieben.

Bei der vorstehend beschriebenen Meßvorrichtung und dem zugehörigen Meßverfahren ist nachteilig, daß für jede Meßkoordinate ein separates Auffanggefäß mit einem separaten Sensor vorzusehen ist. Soll beispielsweise eine Auflösung in einem äquidistanten Raster von 15 Meßkoordinaten in den beiden ebenen Koordinatenrichtungen vorgesehen sein, so ist die Messung an insgesamt 225 Meßkoordinaten erforderlich. Dies erfordert 225 Auffanggefäße mit 225 separaten Sensoren. Dabei ist zu beachten, daß die Sensoren untereinander kalibriert sein müssen, um eine objektive und genaue Messung zu ermöglichen. Der dafür erforderliche Aufwand ist erheblich und setzt einer verbesserten Auflösung der Messung Grenzen.

Ferner ist nachteilig, daß die Auffanggefäße in einer ebenen Auffangfläche angeordnet sind. Bei relativ großen Abspritzwinkeln ist der seitliche Versatz der Auffanggefäße gegenüber der vertikalen Abspritzrichtung relativ groß, so daß der Messung relativ großer Abspritzwinkel Grenzen gesetzt sind. Aufgrund der bei großen Abspritzwinkeln langen Abspritzwege ergibt sich ferner eine Verfälschung des Meßergebnisses, beispielsweise durch die Gravitation und eine Verzögerung des Abspritzstrahls durch die Umgebungsluft. Die Messung der Winkelverteilung des Brennstoffstrahls im Bereich großer Abspritzwinkel ist mit der bekannten Vorrichtung und dem bekannten Verfahren daher unbefriedigend und ungenau.

Vorteile der Erfindung

Das erfindungsgemäße Verfahren mit den Merkmalen des Anspruchs 1 und die erfindungsgemäße Vorrichtung mit den Merkmalen des Anspruchs 6 hat demgegenüber den Vorteil, daß die Anzahl der verwendeten Auffanggefäße und die Anzahl der verwendeten Sensoren wesentlich geringer ist als bei dem bisher verwendeten Verfahren und der bisher verwendeten Vorrichtung. Ferner ist die erzielbare Auflösung der gemessenen Winkelverteilung erheblich größer als bei dem bisher verwendeten Verfahren und der bisher verwendeten Vorrichtung.

Durch die in den Unteransprüchen aufgeführten Maßnahmen sind vorteilhafte Weiterbildungen und Verbesserungen des im Anspruch 1 angegebenen Verfahrens und der im Anspruch 6 angegebenen Vorrichtung möglich.

Auf eine Kalibrierung der Sensoren kann verzichtet werden, wenn die Messung über die notwendige Wiederholung der Messung zum Ausgleich dafür, daß einem Auffanggefäß mehrere Meßkoordinaten zugeordnet sind, hinaus noch mindestens so oft mehrfach wiederholt wird wie Sensoren vorhanden sind. Dabei wird jedem Sensor ein Gewichtungsfaktor zugeordnet, der aufgrund der Redundanz dieser zusätzlichen Messungen ermittelt werden kann. Wenn die Winkelverteilung normiert wird und die absolute Abspritzmenge nicht ermittelt werden soll, kann eine Messung eingespart werden. Die Tatsache, daß eine Kalibrierung der Sensoren nicht erforderlich ist, vereinfacht die Messung erheblich und erhöht die Genauigkeit der Messung beachtlich.

Die Auffanggefäße sind vorzugsweise streifenförmig ausgebildet und umfassen jeweils gleich viele Messungskoordinaten. Die einzelnen, streifenförmigen, nebeneinander angeordneten Auffanggefäße können dann durch Trennwände voneinander getrennt sein, die vorzugsweise Aussparungen aufweisen, deren Ränder auf einer gemeinsamen Kugeloberfläche liegen. Dadurch ist es möglich, die Winkelverteilung auch in einem Bereich großer Abspritzwinkel mit hoher Genauigkeit zu messen, was mit der bekannten ebenen Meßvorrichtung nicht möglich ist. Die Messung der von den Auffanggefäßen aufgenommenen Teilabspritzmengen kann vorteilhaft durch eine kapazitive Füllstandsmessung erfolgen. Vorzugsweise sind die Abstände zwischen den Trennwänden den zu erwartenden Teilabspritzmengen angepaßt, wobei die Abstände zwischen den Trennwänden dort größer sind, wo nur geringe Teilabspritzmengen erreicht werden, beispielsweise bei den außen angeordneten Auffanggefäßen.

Zeichnung

Ausführungsbeispiele der Erfindung sind in der Zeichnung vereinfacht dargestellt und in der nachfolgenden Beschreibung näher erläutert. Es zeigen:

Fig. 1     eine schematische Darstellung eines ersten Ausführungsbeispiels der erfindungsgemäßen Meßvorrichtung;

Fig. 2     eine Draufsicht auf die in Fig. 1 dargestellte Meßvorrichtung, die die Anordnung der Meßkoordinaten erkennen läßt;

Fig. 3     ein zweites Ausführungsbeispiel der erfindungsgemäßen Meßvorrichtung in einer perspektivischen Darstellung;

Fig. 4     eine Seitenansicht eines Zwischenstücks der in Fig. 3 dargestellten Meßvorrichtung;

Fig. 5     ein Detail des Zwischenstücks der in den Fig. 3 und 4 dargestellten Meßvorrichtung;

Fig. 6     ein drittes Ausführungsbeispiel der erfindungsgemäßen Meßvorrichtung in einer geschnittenen Seitendarstellung; und

Fig. 7     einen Ausschnitt der in Fig. 6 dargestellten Meßvorrichtung in einer perspektivischen Darstellung.

Beschreibung der Ausführungsbeispiele

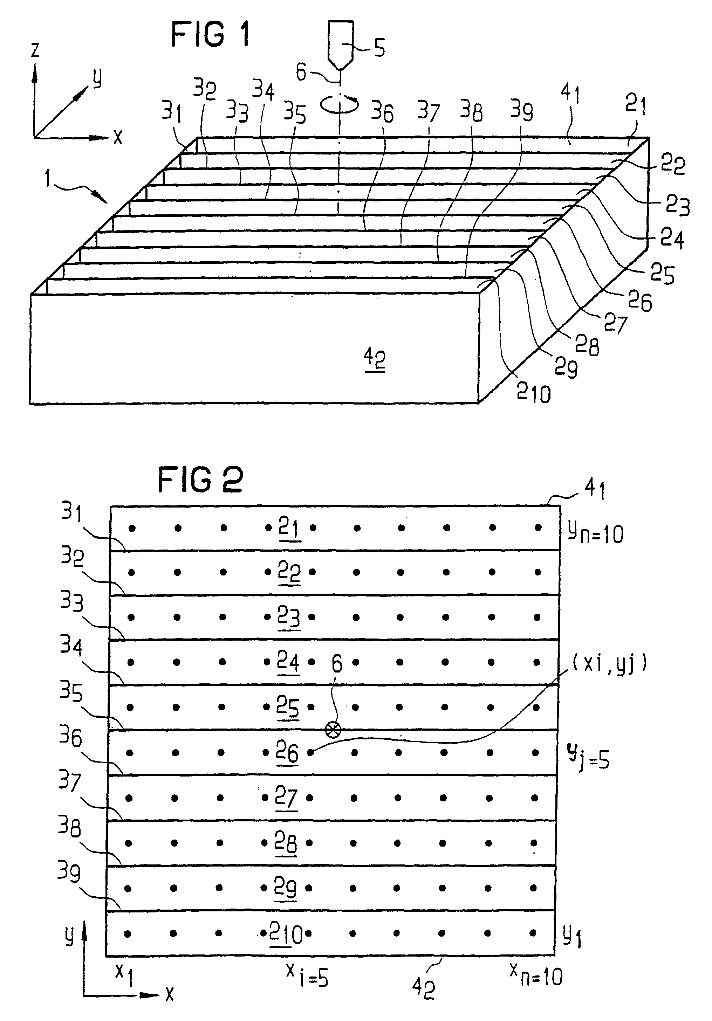

Fig. 1 zeigt ein erstes Ausführungsbeispiel der erfindungsgemäßen Meßvorrichtung 1. Die Meßvorrichtung 1 dieses Ausführungsbeispiels ist relativ einfach ausgestaltet und dient im wesentlichen der Erläuterung des grundsätzlichen Meßprinzips.

Es sind mehrere streifenförmig ausgebildete Auffanggefäße $2_1$ bis $2_{10}$ vorgesehen, die sich mit ihrer Längserstreckung entlang der x-Achse erstrecken. Im Ausführungsbeispiel sind zehn derartige Auffanggefäße $2_1$ bis $2_{10}$ in der y-Richtung versetzt zueinander angeordnet und durch Trennwände $3_1$ bis $3_9$ voneinander getrennt. Die äußeren Auffanggefäße $2_1$ und $2_{10}$ weisen jeweils eine Außenwand $4_1$ und $4_2$ auf. Ein nur schematisch dargestelltes Abspritzelement 5, beispielsweise ein Brennstoffeinspritzventil, befindet sich in der z-Richtung über der erfindungsgemäßen Meßvorrichtung 1. Im dargestellten Ausführungsbeispiel weist die Meßvorrichtung 1 eine quadratische Oberfläche auf und das Abspritzelement 5 befindet sich oberhalb des Schnittpunkts der Diagonalen der quadratischen Oberfläche. Grundsätzlich kann die erfindungsgemäße Meßvorrichtung 1 jedoch auch eine beispielsweise rechteckige Oberfläche mit unterschiedlichen Seitenlängen oder eine runde Oberfläche aufweisen. Erfindungsgemäß ist die Meßvorrichtung 1 um eine Drehachse 6 angeordnet, die sich im Ausführungsbeispiel parallel zu der z-Richtung erstreckt und vorzugsweise mit einer Längsachse des Abspritzelements 5 zusammenfällt. Die Meßvorrichtung 1 dient zur Messung der Winkelverteilung eines von dem Abspritzelement 5 abgespritzten Flüssigkeitsstrahls, beispielsweise eines von einem Brennstoffeinspritzventil abgespritzten Brennstoffstrahls. Die Hauptabspritzrichtung des Abspritzelements 5 fällt im dargestellten Ausführungsbeispiel mit der Drehachse 6 zusammen.

Fig. 2 zeigt eine Draufsicht auf die in Fig. 1 dargestellte Meßvorrichtung 1, wobei die Auffanggefäße $2_1$ bis $2_{10}$ sowie die Trennwände $3_1$ bis $3_9$ und die Außenwände $4_1$ und $4_2$ von oben erkennbar sind.

An der Oberfläche der Meßvorrichtung 1 sind Meßkoordinaten $(x_i, y_j)$ i = 1... n (n = 10), j = 1... n (n = 10) in einem kartesischen Koordinatensystem äquidistant rasterartig verteilt. Dabei befinden sich in dem j-ten Auffanggefäß insgesamt die zehn Meßkoordinaten $(x_1, y_j)...(x_{10}, y_j)$. Insgesamt sind im dargestellten Ausführungsbeispiel 100 Meßkoordinaten vorgesehen. Anders als beim Stand der Technik umfaßt jedes Auffanggefäß $2_1$ bis $2_{10}$ nicht nur eine Meßkoordinate sondern mehrere, im Ausführungsbeispiel 10 Meßkoordinaten. Es sind daher im Ausführungsbeispiel nicht für jede Meßkoordinate jeweils ein Auffanggefäß, also insgesamt 100 Auffanggefäße, sondern lediglich 10 Auffanggefäße $2_1$ bis $2_{10}$ erforderlich. Da jedem Auffanggefäß $2_1$ bis $2_{10}$ auch nur ein Sensor zum Erfassen der von dem zugeordneten Auffanggefäß $2_1$ bis $2_{10}$ aufgefangenen Teilabspritzmenge zugeordnet ist, wird eine erhebliche Anzahl an Sensoren gegenüber der bekannten Meßvorrichtung eingespart. Während bei der bekannten Meßvorrichtung für jede Meßkoordinate ein separater Sensor, also insgesamt 100 Sensoren erforderlich sind, werden bei dem in den Fig. 1 und 2 dargestellten Ausführungsbeispiel lediglich insgesamt 10 Sensoren benötigt.

Das erfindungsgemäße Meßverfahren erfolgt mit folgenden Verfahrensschritten:

Zunächst wird eine erste Messung vorgenommen, wobei das zu vermessende Abspritzelement 5 für ein vorgegebenes Zeitintervall einen Flüssigkeitsstrahl abspritzt, dessen Winkelverteilung gemessen werden soll. Für jedes

Meßgefäß $2_1...2_{10}$ wird bei dieser Messung die Summe $A_j$ der Teilabspritzmengen $A(x_i,y_j)$ an den von dem jeweiligen Auffanggefäß $2_1... 2_{10}$ umfaßten Meßkoordinaten $(x_i,y_j)$ gemäß folgender Gleichung erfaßt:

$$A_j = \sum_{i=1}^{n} A(x_i, y_j) \qquad j = 1...n \qquad (1).$$

Dabei stellt $A_j$ die von dem Sensor des jeweiligen Auffanggefäßes $2_1... 2_{10}$ bei der Einzelmessung ermittelten Abspritzmengen dar, und $A(x_i,y_j)$ stellt die Teilabspritzmenge an dem Ort der Meßkoordinate $(x_i,y_j)$ dar. Dabei werden entsprechend viele summierte Abspritzmengen $A_j$ erhalten wie Auffanggefäße $2_1... 2_{10}$ vorhanden sind. Im dargestellten Ausführungsbeispiel gilt n = 10.

Sodann wird die Meßvorrichtung 1 um die Drehachse 6 um einen vorgegebenen Drehwinkel verdreht. Die Teilabspritzmengen des von dem Abspritzelement 5 abgespritzten Flüssigkeitsstrahls treffen nun jeweils in andere Auffanggefäße $2_1$ bis $2_{10}$. Auch bei dieser wiederholten Messung wird gemäß der Gleichung (1) die summierte Abspritzmenge $A_j$ für jedes der Auffanggefäße $2_1$ bis $2_{10}$ ermittelt. Dabei wird jedoch das Koordinatensystem der gedrehten Meßkoordinaten $(x'_i,y'_j)$ in das ungedrehte Koordinatensystem $(x_i,x_j)$ transformiert, so daß die Auswertung sämtlicher Messungen nachfolgend in einem einheitlichen Koordinatensystem erfolgen kann.

Die Messung wird nachfolgend weitere Male wiederholt, jeweils mit anderen Drehwinkeln der Meßvorrichtung 1 bzw. der Auffanggefäße $2_1$ bis $2_{10}$. Dazu wird die Meßvorrichtung 1 zwischen zwei Messungen jeweils um die Drehachse 6 verdreht. Vorzugsweise wird dabei für den Drehwinkel zwischen zwei Messungen die Schrittweite 360°/a verwendet, wobei a die Gesamtanzahl der Messungen ist. Die Gesamtanzahl a muß größer sein als die Anzahl der Koordinaten n, die von den Auffanggefäßen $2_1$ bis $2_{10}$ jeweils umfaßt werden. Im dargestellten Ausführungsbeispiel müssen daher mindestens zehn Messungen durchgeführt werden, jeweils bei unterschiedlichen Drehwinkeln.

Durch die Vielzahl der Messungen wird ein Gleichungssystem bestehend aus a x n Gleichungen gewonnen. Da a im Ausführungsbeispiel mindestens 10 Messungen umfassen muß, stehen im Ausführungsbeispiel zumindest 100 Gleichungen zur Verfügung. Die Auflösung dieses umfangreichen Gleichungssystems ermöglicht die Bestimmung der unbekannten Variablen dieses Gleichungssystems, nämlich der Teilabspritzmengen $A(x_i, y_j)$ jeweils am Ort der Meßkoordinate $(x_i, y_j)$. Wenn die Anzahl der Messungen a größer gewählt wird als die Anzahl der Auffanggefäße $2_1$ bis $2_{10}$ ergibt sich eine Redundanz, die der Meßgenauigkeit zugute kommt. Durch eine Erhöhung der Anzahl der Messungen a läßt sich auch die Auflösung steigern, da dann jedem Auffanggefäß $2_1$ bis $2_{10}$ weiter Meßkoordinaten zugeordnet werden können, die rechnerisch als weitere Stützstellen der Verteilung der Abspritzmengen innerhalb der Auffanggefäße $2_1$ bis $2_{10}$ dienen.

Auch eine Eichung bzw. Kalibrierung der an den einzelnen Auffanggefäßen $2_1$ bis $2_{10}$ angeschlossenen Sensoren ist bei dem erfindungsgemäßen Verfahren nicht notwendig. Es sind dann allerdings entsprechend der Anzahl der verwendeten Sensoren zusätzliche Messungen bei weiteren zusätzlichen Drehwinkeln erforderlich. Dabei wird bei jeder Einzelmessung wiederum die von den Sensoren erfaßte Abspritzmenge $A_j$ des zugehörigen Auffanggefäßes $2_j$ gemäß folgender Gleichung erfaßt:

$$A_j = \sum_{i=1}^{n} g_j \cdot A(x_i, y_j) \qquad j = 1...n \qquad (2)$$

Der gegenüber der Gleichung (1) in der Gleichung (2) zusätzlich auftretende Faktor $g_j$ stellt einen Gewichtungsfaktor für den entsprechenden Sensor dar. Die Gewichtungsfaktoren $g_j$ sind zunächst unbekannt und stellen weitere n Unbekannte des Gleichungssystems dar. Es sind deshalb n zusätzliche Messungen erforderlich. Wenn die zu messende Winkelverteilung mittels einer geeigneten Normierung normiert wird, entfällt eine der zusätzlichen Messungen, so daß nur n - 1 zusätzliche Messungen erforderlich sind. Zur numerischen Auswertung ist es vorteilhaft, das Gleichungssystem zu linearisieren. Dies kann z. B. mittels einer Taylor-Entwicklung erfolgen, wobei die Produktterme durch eine Näherung erster Ordnung angenähert werden und nach dem ersten, linearen Glied der Taylor-Entwicklung abgebrochen wird. Da die Sensoren in der Regel in der gleichen Weise hergestellt worden sind, sind die in der Praxis auftretenden Variationen zwischen den einzelnen Sensoren relativ gering, so daß eine lineare Approximation in der Praxis ausreicht.

Die Gewichtungsfaktoren $g_j$ müssen nur einmal wie beschrieben ermittelt werden und können dann als feste Werte abgespeichert werden. Gleiches gilt für die Koeffizienten für die Transformation der in einem gedrehten Koordinatensystem gemessenen Meßwerte in ein ungedrehtes Koordinatensystem, sofern bei jeder Meßreihe gleiche Drehwinkel verwendet werden. Dadurch wird erhebliche Rechenleistung bei der numerischen Auswertung eingespart.

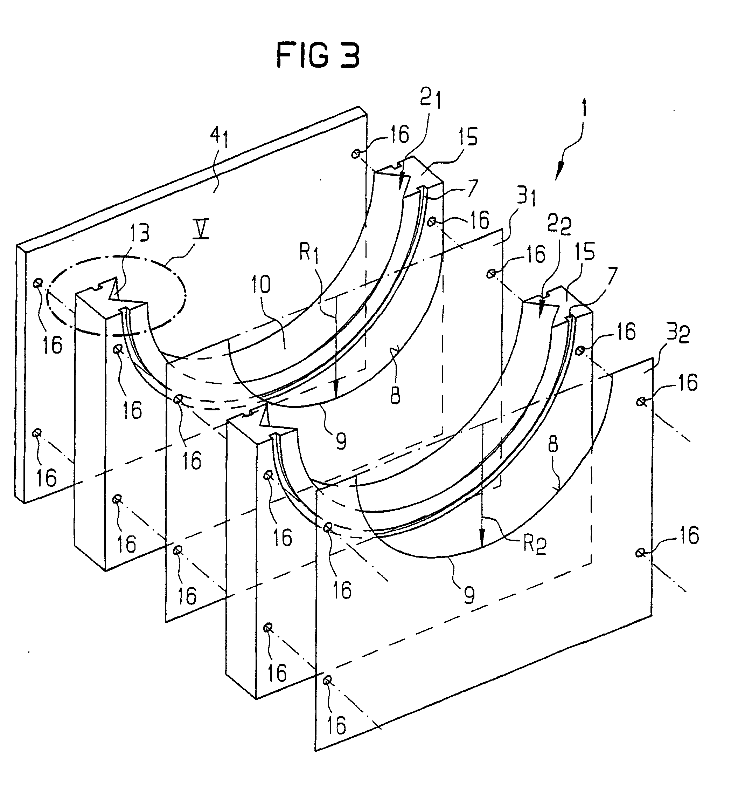

Die Fig. 3 bis 5 zeigen ein zweites Ausführungsbeispiel der erfindungsgemäßen Meßvorrichtung 1. Ein wesentlicher Unterschied zu dem anhand der Figuren 1 und 2 beschriebenen ersten Ausführungsbeispiel besteht darin, daß die Meßkoordinaten ($x_i$, $y_j$) nicht in einer Ebene, sondern auf einer Kugeloberfläche bzw. einer Teilkugeloberfläche verteilt angeordnet sind. Der Vorteil gegenüber einer ebenen Anordnung der Meßkoordinaten ($x_i$, $y_j$) liegt darin, daß auch für große Abspritzwinkel, d. h. für Abspritzwinkel, die eine große Neigung gegenüber der z-Richtung in Fig. 1 aufweisen, eine Messung der Winkelverteilung mit relativ hoher Genauigkeit erfolgen kann. Bei der in den Fig. 1 und 2 dargestellten Anordnung besteht für große Abspritzwinkel das Problem, daß der Auftreffpunkt auf der Ebene der Meßkoordinaten ($x_i$, $y_j$), d. h. auf der Oberfläche der Meßvorrichtung 1 mit großem Abstand von der vertikalen Projektion des Abspritzelements 5 erfolgt. Dies bedingt zunächst eine relativ große Oberfläche der Meßvorrichtung 1, was für einen praktischen Meßaufbau ungünstig ist. Aufgrund der langen Flugbahn der abgespritzten Flüssigkeit bis zum Erreichen der Oberfläche der Meßvorrichtung 1 tritt aufgrund der Gravitation und einer Verzögerung durch die Wechselwirkung mit der Umgebungsluft eine Verfälschung der Messung aufgrund einer Krümmung der Flugbahn auf. Diese Nachteile werden bei dem in den Fig. 3 bis 5 dargestellten Ausführungsbeispiel überwunden, da die bei diesem Ausführungsbeispiel auf einer Halbkugel angeordneten Meßkoordinaten von dem Abspritzpunkt des Abspritzelements 5 jeweils den gleichen Abstand aufweisen.

Die in Fig. 3 in einer perspektivischen Ansicht teilweise dargestellte Meßvorrichtung 1 besteht im wesentlichen aus Trennwänden $3_1$, $3_2$, die durch Zwischenstücke 15 voneinander und von der Außenwand $4_1$ sowie von der nicht dargestellten Außenwand $4_2$ beabstandet sind. Aus Vereinfachungsgründen sind in Fig. 3 nur zwei Trennwände $3_1$, $3_2$ und zwei Zwischenstücke 15 dargestellt. Die Außenwand $4_1$, die Zwischenstücke 15 und die Trennwände $3_1$ und $3_2$ weisen im Ausführungsbeispiel konzentrische Bohrungen 16 auf. Die Außenwand $4_1$, die Zwischenstücke 15 und die Trennwände $3_1$ und $3_2$ sowie die in der Fig. nicht erkennbaren weiteren Trennwände, Zwischenstücke und gegenüberliegende Außenwand $4_2$ sind mittels in die Bohrungen 16 einführbarer Schrauben oder Stifte so miteinander verbindbar, daß die Trennwände $3_1$, $3_2$ und die Außenwände $4_1$, $4_2$ jeweils an den benachbarten Zwischenstücken 15 eng anliegen. Zur Abdichtung dient jeweils eine Nut 7 an den Zwischenstücken 15, in welche z. B. eine Gummilippe oder ein anderes Dichtmittel einlegbar ist.

Wesentlich ist, daß die Trennwände $3_1$, $3_2$ jeweils einen teilkreisförmigen Ausschnitt 8 aufweisen. Der Radius der im Ausführungsbeispiel jeweils halbkreisförmigen Ausschnitte 8 verringert sich dabei ausgehend von der Mitte der Meßvorrichtung 1 in Richtung auf die beiden Außenwände $4_1$ bzw. $4_2$, wobei die Trennwände $3_1$, $3_2$ in Richtung auf die Außenwände $4_1$, $4_2$ einen jeweils kleineren Radius $R_1$, $R_2$ ihres Ausschnitts 8 aufweisen. Die Radien $R_1$, $R_2$ sind dabei so gewählt, daß die Ränder 9 im montierten Zustand der Meßvorrichtung 1 auf einer Teilkugel, im dargestellten Ausführungsbeispiel auf einer Halbkugel, liegen. Das Abspritzelement 5 ist dabei so angeordnet, daß sein Abspritzpunkt mit dem Mittelpunkt der Teilkugel zusammenfällt. Die Ausschnitte 8 der blendenartigen Trennwände $3_1$, $3_2$ definieren die geometrische Lage der Meßkoordinaten.

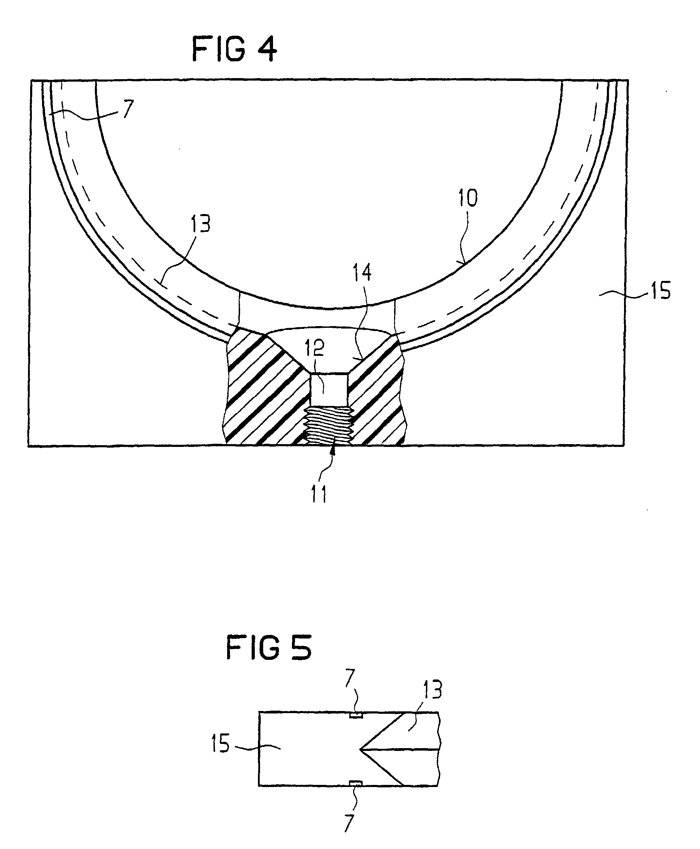

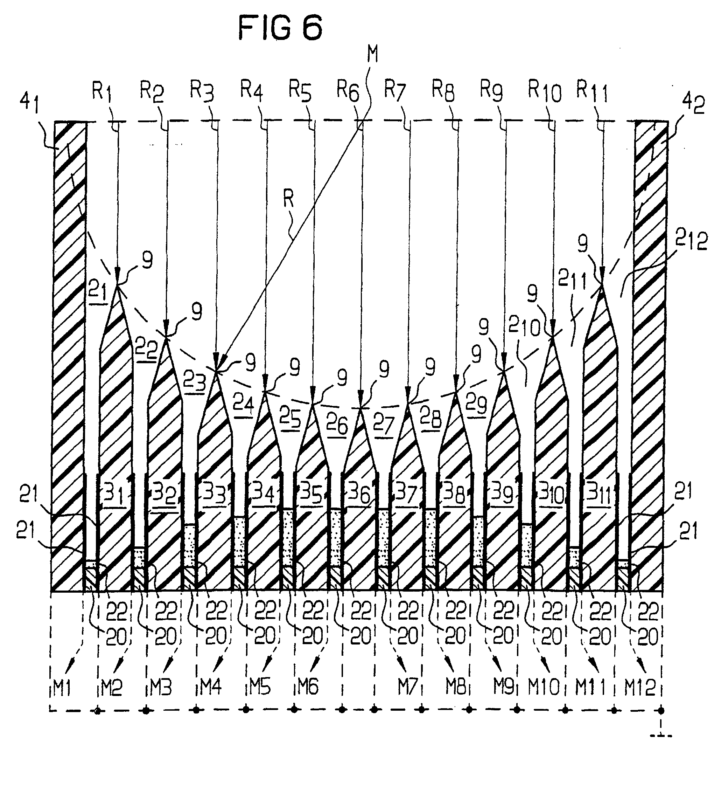

Fig. 4 zeigt eine teilweise geschnittene Seitenansicht eines Zwischenstücks 15. Wie aus den Fig. 3 und 4 erkennbar ist, weisen die Zwischenstücke 15 jeweils eine Ausnehmung 10 auf, die im dargestellten Ausführungsbeispiel ebenfalls abgerundet ist. Die Form der Ausnehmung 10 hat jedoch keinen Einfluß auf die geometrische Lage der Meßkoordinaten. Die Abrundung der Ausnehmung 10 dient lediglich dazu, daß die von den Auffanggefäßen $2_1$, $2_2$ aufgefangene Teilabspritzmenge des Flüssigkeitsstrahls einem an einem Anschluß 11 angeschlossenen, nicht dargestellten Sensor rasch zugeführt wird. Der Anschluß 11 ist im dargestellten Ausführungsbeispiel in einer Bohrung 12 an der Unterseite der Zwischenstücke 15 ausgebildet. Die Oberseite der Zwischenstücke 15 weist jeweils eine im Ausführungsbeispiel V-förmige Nut 13 auf, die über eine an dem Boden der Nut 13 ausgebildete trichterförmige Erweiterung 14 mit der Bohrung 12 des Sensoranschlusses 11 verbunden ist. Die Erweiterung 14 dient dem erleichterten Ablauf der Flüssigkeit in Richtung auf den Sensoranschluß 11. Die Ausbildung der Nut 13 ist auch aus Fig. 5 erkennbar, die eine Draufsicht auf den Ausschnitt V in Fig. 3 zeigt. Jede Nut 13 der Zwischenstücke 15 stellt ein Auffanggefäß 2 zum Sammeln der aufzufangenden Teilabspritzmengen $A(x_i$, $y_j)$ dar.

Auch bei der Messung mit der in den Fig. 3 bis 5 dargestellten Meßvorrichtung erfolgt eine Vielzahl von Einzelmessungen mit jeweils unterschiedlichen Drehwinkeln in gleicher Weise wie dies bereits anhand der Fig. 1 und 2 beschrieben wurde. Alternativ kann auch eine kontinuierliche Messung mit sich fortwährend langsam drehender Meßvorrichtung 1 und fortwährender Messung durch die Sensoren erfolgen. Eine störende Nachlaufverzögerung der Flüssigkeit kann eliminiert werden, indem die Meßvorrichtung in beide Drehrichtungen gedreht wird.

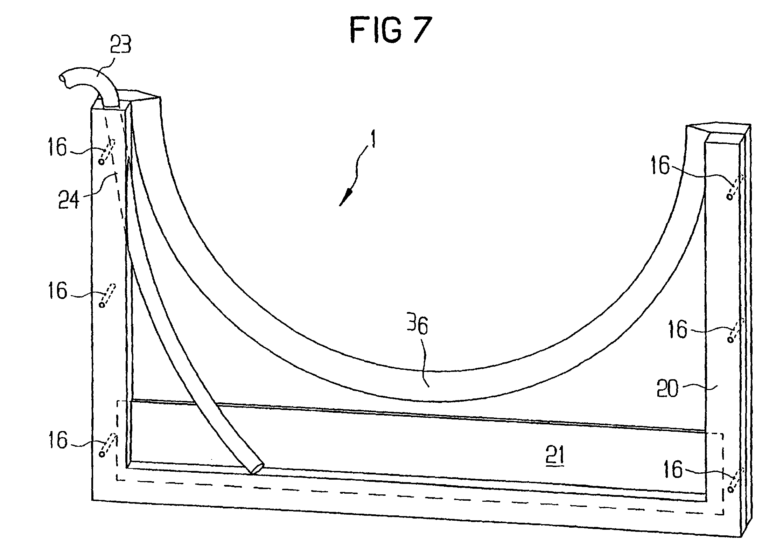

Die Fig. 6 und 7 zeigen ein drittes Ausführungsbeispiel der erfindungsgemäßen Meßvorrichtung 1, wobei Fig. 6 einen Schnitt quer zu den Trennwänden $3_1$ bis $3_{11}$ zeigt und Fig. 7 eine perspektivische Darstellung einer einzelnen

Trennwand $3_6$ darstellt.

Im Gegensatz zu dem in den Fig. 3 bis 5 dargestellten Ausführungsbeispiel sind bei dem Ausführungsbeispiel der Fig. 6 und 7 die Trennwände $3_1$ bis $3_{11}$ aus einem relativ dicken, elektrisch isolierenden Material ausgebildet und an den Rändern 9 dachartig angespitzt. Auch bei diesem Ausführungsbeispiel sind die Radien $R_1$ bis $R_{11}$ der teilkreisförmigen Ausschnitte 8 so dimensioniert, daß die Ränder 9 der Ausschnitte 8 auf einer Halbkugel mit dem Radius R um den Mittelpunkt M liegen. An dem Mittelpunkt M befindet sich die Abspritzstelle des Abspritzelements 5, z. B. die Abspritzöffnung eines Brennstoffeinspritzventils.

Die Trennwände $3_1$ bis $3_{11}$ sind durch elektrisch isolierende Abstandshalter 20 voneinander beabstandet und beidseitig mit Elektroden 21 versehen. Die Innenseiten der Außenwände $4_1$ und $4_2$ sind ebenfalls mit Elektroden 21 versehen. Die Elektroden $2_1$ können beispielsweise durch Aufdampfen oder andere Beschichtungsverfahren auf den elektrisch isolierenden, beispielsweise aus einem Kunststoffmaterial hergestellten Trennwänden $3_1$ bis $3_{11}$ und Außenwänden $4_1$ und $4_2$ aufgebracht sein. An den zwischen den Trennwänden $3_1$ bis $3_{11}$ bzw. zwischen der Außenwand $4_1$ und der ersten Trennwand $3_1$ und der Außenwand $4_2$ und der letzten Trennwand $3_{11}$ ausgebildeten Auffanggefäßen $2_1$ bis $2_{12}$ stehen sich daher jeweils zwei Elektroden 21 gegenüber. Eine der Elektroden 21 ist mit dem Massepotential einer elektrischen Schaltung verbunden, während die jeweils andere Elektrode 21 über einen Anschluß $M_1$ bis $M_{12}$ mit einer beispielsweise als Brückenschaltung arbeitenden Kapazitätsmeßschaltung in Verbindung steht. Der Füllstand der von den Auffanggefäßen $2_1$ bis $2_{12}$ aufgefangenen elektrisch nicht leitenden Flüssigkeit 22 kann daher in besonders einfacher Weise kapazitiv gemessen werden. Elektrisch leitfähige Flüssigkeitsmengen können ebenfalls kapazitiv gemessen werden, indem die metallischen Elektroden 21 mit einem homogenen, dünnen isolierenden Überzug versehen werden. Die kapazitive Messung des Füllstandes beruht darauf, daß die aufgefangene Flüssigkeit eine andere Dielektrizitätskonstante hat, als die sich in den ungefüllten Bereichen zwischen den Elektroden 21 befindliche Luft. Dabei können mehrere Messungen unter verschiedenen Drehwinkeln wie beschrieben vorgenommen werden, und die sich jeweils ergebende Kapazitätsänderung kennzeichnet die Änderung des Füllstands für die vorangegangene Messung. Ein Entleeren der Auffanggefäße $2_1$ bis $2_{12}$ ist daher nur am Ende der Meßreihe erforderlich.

Fig. 7 zeigt eine perspektivische Darstellung einer Trennwand $3_6$ und des Abstandshalters 20. Erkennbar sind die Bohrungen 16 zur Verbindung der einzelnen Abstandshalter 20 und Trennwände $3_1$ bis $3_{11}$ sowie der Außenwände $4_1$ und $4_2$. Ferner ist die Elektrode 21 zu erkennen, die im Randbereich unter den Abstandshalter 20 geführt ist, um Randeffekte bei der Messung des Füllstandes zu vermeiden. Die Entleerung der Auffanggefäße $2_1$ bis $2_{12}$ erfolgt beispielsweise mittels eines Schlauchs 23 und einer geeigneten Absaugeeinrichtung. Zur Befestigung des Schlauchs 23 ist im Ausführungsbeispiel am oberen Ende des U-förmig ausgeformten Abstandshalters 20 eine Bohrung 24 vorgesehen, durch welche der Schlauch 23 hindurchgeführt ist.

Die Breite der Auffanggefäße $2_1$ bis $2_{12}$ kann an die zu erwartende aufzufangende Teilabspritzmenge angepaßt werden. Dabei kann die Auffangbreite zwischen zwei Trennwänden $3_1$ bis $3_{11}$ bei gleichem Abstand zwischen den Elektroden 21 in jenen Bereichen größer gewählt werden, in welchen eine geringe Teilabspritzmenge erwartet wird, beispielsweise an den außen liegenden Auffanggefäßen $2_1$ und $2_{12}$. Die Variation der Auffangbreite kann durch eine Variation der Wandstärke der Trennwände $3_1$ bis $3_{11}$ erfolgen. Umgekehrt ist es auch möglich, durch schmälere Auffangbreiten, z. B. im Zentralbereich der Meßvorrichtung 1, die örtliche Auflösung zu steigern.

Die Ränder 9 der Trennwände $3_1$ bis $3_{11}$ müssen nicht notwendigerweise auf einer Halbkugel liegen, sondern können auch eine Kugelkalotte beschreiben, die einen Winkel von mehr als 180° einschließt. Es kann dann die Winkelverteilung des abgespritzten Flüssigkeitsstrahls auch in einem Winkelbereich gemessen werden, der über einen Öffnungswinkel von 180°, d. h. über eine Abweichung von 90° gegenüber der Vertikalen, hinausgeht. Derartige Messungen sind mit Meßvorrichtungen 1 mit einer ebenen Meßoberfläche grundsätzlich nicht möglich. Zwischen den durch die einzelnen Meßkoordinaten vorgegebenen Stützstellen und den dort ermittelten Teilabspritzmengen kann eine Interpolation erfolgen.

**Patentansprüche**

1. Verfahren zum Messen der Winkelverteilung eines von einem Abspritzelement (5) abgespritzten Flüssigkeitsstrahls, insbesondere eines von einem Brennstoffeinspritzventil abgespritzten Brennstoffstrahls, wobei Teilabspritzmengen ($A(x_i,y_j)$) mittels Auffanggefäßen ($2_1$, $2_2$,...) an mehreren räumlich oder flächig verteilt angeordneten Meßkoordinaten ($x_i,y_j$) durch eine Messung erfaßt werden,
**dadurch gekennzeichnet,**
**daß** die Auffanggefäße ($2_1$, $2_2$,...) mehrere Meßkoordinaten ($x_i,y_j$) umfassen, und
**daß** die Messung mit um eine Drehachse (6) mit unterschiedlichen Drehwinkeln verdrehten Auffanggefäßen ($2_1$, $2_2$,...) mehrfach wiederholt durchgeführt wird.

2. Verfahren nach Anspruch 1,

**dadurch gekennzeichnet,**
**daß** die Auffanggefäße ($2_1$, $2_2$,...) höchstens n Meßkoordinaten ($x_i$,$y_j$) umfassen und die Messung mindestens n-fach durchgeführt wird, wobei n eine ganze Zahl größer als 1 ist.

3. Verfahren nach Anspruch 1 oder 2,
   **dadurch gekennzeichnet,**
   **daß** die Messung der Teilabspritzmengen ($A(x_i,y_j)$) mittels Sensoren erfolgt, die jeweils einem Auffanggefäß ($2_1$, $2_2$,...) zugeordnet sind und untereinander nicht kalibriert sind,
   **daß** die von den Auffanggefäßen ($2_1$, $2_2$,...) aufgefangenen und von den Sensoren gemessenen Teilabspritzmengen ($A(x_i,y_j)$) zur Kalibrierung mit Gewichtungsfaktoren ($g_j$) gewichtet werden, und daß die Messung zur Ermittlung der Gewichtungsfaktoren ($g_j$) zusätzlich zumindest entsprechend der Anzahl der Sensoren bei unterschiedlichen Drehwinkeln wiederholt wird.

4. Verfahren nach einem der Ansprüche 1 bis 3,
   **dadurch gekennzeichnet,**
   **daß** die Auffanggefäße ($2_1$, $2_2$,...) streifenförmig ausgebildet sind und mehrere in einer ersten Koordinatenrichtung (x) zueinander versetzte Meßkoordinaten ($x_i$,$y_j$) umfassen, wobei mehrere Auffanggefäße ($2_1$, $2_2$,...) in einer zweiten Koordinatenrichtung (y) versetzt zueinander angeordnet sind, und die Drehachse (6) parallel zu einer dritten Koordinatenrichtung (z) angeordnet ist.

5. Verfahren nach Anspruch 4,
   **dadurch gekennzeichnet,**
   **daß** m streifenförmige Auffanggefäße ($2_1$, $2_2$,...) vorgesehen sind, die jeweils n Meßkoordinaten ($x_i$,$y_j$) umfassen, wobei n und m ganze Zahlen größer als 1 sind,
   **daß** die Messung der von den Auffanggefäßen ($2_1$, $2_2$,...) aufgefangenen Teilabspritzmengen ($A(x_i, y_j)$) bei jeweils unterschiedlichen Drehwinkeln mindestens n-fach durchgeführt wird und die von den einzelnen Auffanggefäßen ($2_1$, $2_2$,...) bei den einzelnen Messungen unter unterschiedlichen Drehwinkeln insgesamt aufgefangenen Teilabspritzmengen ($A_j$) ermittelt werden,
   **daß** das Koordinatensystem der Meßkoordinaten ($x_i$,$y_j$) für jeden Drehwinkel einer Messung in ein ungedrehtes Koordinatensystem transformiert wird, und
   **daß** ein Gleichungssystem gelöst wird, das aus mindestens n x m Gleichungen mit jeweils n x m unbekannten Teilabspritzmengen ($A(x_i,y_j)$) an den einzelnen Meßkoordinaten ($x_i$,$y_j$) der Auffanggefäße ($2_1$, $2_2$,...) besteht.

6. Vorrichtung zum Messen der Winkelverteilung eines von einem Abspritzelement (5) abgespritzten Flüssigkeitsstrahls, insbesondere eines von einem Brennstoffeinspritzventil abgespritzten Brennstoffstrahls, mit mehreren Auffanggefäßen ($2_1$, $2_2$,...) zum Erfassen von Teilabspritzmengen ($A(x_i,y_j)$) an mehreren räumlich oder flächig verteilt angeordneten Meßkoordinaten ($x_i$,$y_j$),
   **dadurch gekennzeichnet,**
   **daß** die Auffanggefäße ($2_1$, $2_2$,...) so ausgeformt sind, daß sie jeweils mehrere Meßkoordinaten ($x_i$,$y_j$) umfassen, wobei jedem Auffanggefäß ($2_1$, $2_2$,...) ein Sensor zum Erfassen der von dem jeweiligen Auffanggefäß aufgefangenen Teilabspritzmenge ($A(x_i, y_j)$) zugeordnet ist, und
   **daß** die Auffanggefäße ($2_1$, $2_2$,...) um eine Drehachse (6) drehbar angeordnet sind.

7. Vorrichtung nach Anspruch 6,
   **dadurch gekennzeichnet,**
   **daß** die Auffanggefäße ($2_1$, $2_2$,...) streifenförmig ausgebildet sind und sich entlang einer Längserstreckung erstrecken, und
   **daß** mehrere streifenförmige Auffanggefäße ($2_1$, $2_2$,...) nebeneinander quer zu der Längserstreckung versetzt zueinander angeordnet sind.

8. Vorrichtung nach Anspruch 7,
   **dadurch gekennzeichnet,**
   **daß** die Auffanggefäße ($2_1$, $2_2$,...) durch Trennwände ($3_1$, $3_2$,...) voneinander getrennt sind, die teilkreisförmige Ausschnitte (8) aufweisen, deren Radien ($R_1$, $R_2$...) sich von dem mittleren Auffanggefäß ($2_7$) zu den äußeren Auffanggefäßen ($2_1$, $2_{12}$) hin verringert, wobei die Ränder (9) der teilkreisförmigen Ausschnitte (8) auf einer gemeinsamen Kugeloberfläche liegen.

9. Vorrichtung nach Anspruch 8,

**dadurch gekennzeichnet,**

**daß** die Trennwände ($3_1$, $3_2$,...) durch Zwischenstücke (15) beabstandet sind, die jeweils eine Ausnehmung (10) aufweisen, die größer als die Ausschnitte (8) der benachbarten Trennwände ($3_1$, $3_2$,...) ist und die eine Sammelnut (13) zum Sammeln der aufgefangenen Teilabspritzmengen ($A(x_i, y_j)$) des Flüssigkeitsstrahls aufweist, welche zu einem Anschluß (11) für den zugeordneten Sensor führt.

10. Vorrichtung nach Anspruch 8,
**dadurch gekennzeichnet,**
**daß** Außenwände ($4_1$, $4_2$) der äußeren Auffanggefäße ($2_1$, $2_{12}$) und die Trennwände ($3_1$, $3_2$,...) Elektroden (21) zur kapazitiven Messung des Füllstandes der aufgefangenen Flüssigkeit aufweisen.

11. Vorrichtung nach einem der Ansprüche 8 bis 10,
**dadurch gekennzeichnet,**
**daß** sich der Abstand zwischen den Trennwänden ($3_1$, $3_2$,...) an den Ausschnitten (8) von dem mittleren Auffanggefäß ($2_7$) zu den äußeren Auffanggefäßen ($2_1$, $2_{12}$) hin vergrößert .

**Claims**

1. Method for measuring the angular distribution of a liquid spray produced by a spray element (5), in particular of a jet of fuel which is produced by a fuel injection valve, partial spray quantities ($A(x_i, y_j)$) being sensed by a measurement by means of collection vessels ($2_1$, $2_2$,...) at a plurality of measuring coordinates ($x_i, y_j$) which are distributed in a spatial or planar arrangement, **characterized in that** the collection vessels ($2_1$, $2_2$,...) comprise a plurality of measuring coordinates ($x_i, y_j$), and **in that** the measurement is carried out repeatedly using collection vessels ($2_1$, $2_2$,...) which are rotated about an axis (6) of rotation with diff erent rotary angles.

2. Method according to Claim 1, **characterized in that** the collection vessels ($2_1$, $2_2$,...) comprise a maximum of n measuring coordinates ($x_i, y_j$), and the measurement is carried out at least n times, n being an integer greater than 1.

3. Method according to Claim 1 or 2, **characterized in that** the measurement of the partial spray quantities ($A(x_i, y_j)$) is carried out by means of sensors which are each assigned to a collection vessel ($2_1$, $2_2$,...) and are not standardized with respect to one another, **in that** the partial spray quantities ($A(x_i, y_j)$) which are collected by the collection vessels ($2_1$, $2_2$,...) and measured by the sensors are weighted with weighting factors ($g_j$) in order to standardize them, and **in that**, in order to determine the weighting factors ($g_j$), the measurement is additionally repeated at least in accordance with the number of sensors, with different rotational angles.

4. Method according to one of Claims 1 to 3,
**characterized in that** the collection vessels ($2_1$, $2_2$,...) are of strip-shaped construction and comprise a plurality of measuring coordinates ($x_i, y_j$) which are offset with respect to one another in a first coordinate direction (x), a plurality of collection vessels ($2_1$, $2_2$,...) being arranged offset with respect to one another in a second coordinate direction (y), and the axis (6) of rotation being arranged in parallel with a third coordinate direction (z).

5. Method according to Claim 4, **characterized in that** m strip-shaped collection vessels ($2_1$, $2_2$,...) are provided which each comprise n measuring coordinates ($x_i, y_j$), n and m being integers greater than 1, **in that** the measurement of the partial spray quantities ($A(x_i, y_j)$) which are collected by the collection vessels ($2_1$, $2_2$,...) is carried out at least n times at respectively different rotational angles and the partial spray quantities ($A_j$) which are collected overall by the individual collection vessels ($2_1$, $2_2$,...) during the individual measurements at different rotary angles are determined, **in that** the coordinate system of the measuring coordinate ($x_i, y_j$) is transformed into a non-rotated coordinate system for each rotational angle of a measurement, and **in that** an equation system which is composed of at least n x m equations each with n x m unknown partial spray quantities ($A(x_i, y_j)$) of the individual measuring coordinates ($x_i, y_j$) of the collection vessels ($2_1$, $2_2$,...) is solved.

6. Device for measuring the angular distribution of a spray of liquid which is produced by a spray element (5), in particular of a jet of fuel which is produced by a fuel injection valve, having a plurality of collection vessels ($2_1$, $2_2$,...) for sensing partial spray quantities ($A(x_i, y_j)$) at a plurality of measuring coordinates ($x_i, y_j$) which are distributed in a spatial or planar arrangement, **characterized in that** the collection vessels ($2_1$, $2_2$,...) are shaped in such a way that they each comprise a plurality of measuring coordinate ($x_i, y_j$), each collection vessel ($2_1$, $2_2$,...) being assigned a sensor for sensing the partial spray quantity ($A(x_i, y_j)$) which is collected by the respective collection vessel, and **in that** the collection vessels ($2_1$, $2_2$,...) are arranged so as to be capable of rotating about an axis (6) of rotation.

7. Device according to Claim 6, **characterized in that** the collection vessels ($2_1$, $2_2$,...) are of strip-shaped construction and extend along a longitudinal extent, and **in that** a plurality of strip-shaped collection vessels ($2_1$, $2_2$,...) are arranged one next to the other transversely with the longitudinal extent and offset with respect to one another.

8. Device according to Claim 7, **characterized in that** the collection vessels ($2_1$, $2_2$,...) are separated from one another by dividing walls ($3_1$, $3_2$,...) which have cut-outs (8) in the shape of part circles, the radii ($R_1$, $R_2$...) of which decreases from the central collection vessel ($2_7$) to the outer collection vessels ($2_1$, $2_{12}$), the edges (9) of the cut-outs (8) in the shape of part circles lying on a common spherical surface.

9. Device according to Claim 8, **characterized in that** the dividing walls ($3_1$, $3_2$,...) are spaced by intermediate elements (15) which each have a recess (10) which is greater than the cut-outs (8) of the adjacent dividing walls ($3_1$, $3_2$,...) and which has a channelling groove (13) for channelling the collected partial spray quantities ($A(x_i, y_j)$) of the spray of liquid, which collecting groove (13) leads to a port (11) for the assigned sensor.

10. Device according to Claim 8, **characterized in that** the outer walls ($4_1$, $4_2$) of the outer collecting vessels ($2_1$, $2_{12}$) and the dividing walls ($3_1$, $3_2$,...) have electrodes (21) for capacitively measuring the filling level of the fluid which is collected.

11. Device according to one of Claims 8 to 10, **characterized in that** the distance between the dividing walls ($3_1$, $3_2$,...) at the cut-outs (8) increases from the central collecting vessel ($2_7$) to the outer collecting vessels ($2_1$, $2_{12}$).

**Revendications**

1. Procédé de mesure de la répartition angulaire d'un jet de fluide éjecté par un élément éjecteur (5), plus particulièrement d'un jet de carburant éjecté par un injecteur de carburant, des quantités partielles éjectées ($A(x_i, y_j)$) étant déterminées par une mesure effectuée au moyen de récipients collecteurs ($2_1$, $2_2$,...) se trouvant sur plusieurs coordonnées de mesure ($x_i$, $y_j$) réparties soit dans le plan soit dans l'espace,
**caractérisé en ce que**
les récipients collecteurs ($2_1$, $2_2$,...) englobent plusieurs coordonnées de mesure ($x_i$, $y_j$), et
la mesure réalisée est répétée à plusieurs reprises avec des récipients collecteurs ($2_1$, $2_2$,...) décalés autour d'un axe de rotation (6) selon plusieurs angles de rotation.

2. Procédé selon la revendication 1,
**caractérisé en ce que**
les récipients collecteurs ($2_1$, $2_2$,...) englobent au plus n coordonnées de mesure ($x_i$, $y_j$) et la mesure est réalisée au moins n fois, n étant un nombre entier supérieur à 1.

3. Procédé selon l'une des revendications 1 ou 2,
**caractérisé en ce que**
la mesure des quantités partielles éjectées ($A(x_i, y_j)$) se fait au moyen de capteurs respectivement associés à un récipient collecteur ($2_1$, $2_2$,...) et n'étant pas calibrés entre eux, et les quantités partielles éjectées ($A(x_i, y_j)$) collectées par les récipients collecteurs ($2_1$, $2_2$,...) et mesurées par les capteurs sont pondérées pour le calibrage au moyen de facteurs de pondération ($g_j$), la mesure permettant de déterminer les facteurs de pondération ($g_j$) étant en outre répétée pour différents angles de rotation au moins autant de fois qu'il y a de capteurs

4. Procédé selon l'une quelconque des revendications 1 à 3,
**caractérisé en ce que**
les récipients collecteurs ($2_1$, $2_2$,...) sont en forme de bande et englobent plusieurs coordonnées de mesure ($x_i$, $y_j$) se déplaçant les unes par rapport aux autres dans une première direction de coordonnées (x), plusieurs récipients collecteurs ($2_1$, $2_2$,...) étant disposés de manière à se déplacer les uns par rapport aux autres dans une deuxième direction de coordonnées (y), et l'axe de rotation (6) étant disposé parallèlement à une troisième direction de coordonnées (z).

5. Procédé selon la revendication 4,

**caractérisé en ce que**

m récipients collecteurs ($2_1$, $2_2$, ...) en forme de bande comportant chacun n coordonnées de mesure ($x_i$, $y_j$) sont prévus, n et m étant des nombres entiers supérieurs à 1, et la mesure des quantités partielles éjectées ($A(x_i, y_j)$) collectées par les récipients collecteurs ($2_1$, $2_2$, ...) est réalisée au moins n fois pour l'ensemble des différents angles de rotation, chaque récipient collecteur ($2_1$, $2_2$, ...) détermine au cours de chaque mesure les quantités éjectées ($A_j$) collectées au total pour les différents angles de rotation, le système de coordonnées de mesure ($x_i$, $y_j$) est converti pour chaque angle de rotation en un système de coordonnées non pivotées, et on résout un système d'équations composé d'au moins n x m équations comportant à chaque fois n x m quantités éjectées ($A(x_i, y_j)$) inconnues pour les différentes coordonnées de mesure ($x_i$, $y_j$) des récipients collecteurs ($2_1$, $2_2$, ...).

6.  Dispositif de mesure de la répartition angulaire d'un jet de fluide éjecté par un élément éjecteur (5), plus particulièrement d'un jet de carburant éjecté par une soupape d'injection de carburant présentant plusieurs récipients collecteurs ($2_1$, $2_2$, ...) pour déterminer les quantités partielles éjectées ($A(x_i, y_j)$) collectées sur plusieurs coordonnées de mesure ($x_i$, $y_j$) réparties soit dans le plan soit dans l'espace,
    **caractérisé en ce que**
    les récipients collecteurs ($2_1$, $2_2$, ...) sont respectivement formés de manière à englober plusieurs coordonnées de mesure ($x_i$, $y_j$), chaque récipient collecteur ($2_1$, $2_2$, ...) étant associé à un capteur afin de déterminer la quantité éjectée ($A(x_i, y_j)$) collectée par le récipient collecteur en question, et les récipients collecteurs ($2_1$, $2_2$, ...) sont disposés de manière à pouvoir tourner autour d'un axe de rotation (6).

7.  Dispositif selon la revendication 6,
    **caractérisé en ce que**
    les récipients collecteurs ($2_1$, $2_2$, ...) sont en forme de bande, disposés en longueur, et plusieurs récipients collecteurs ($2_1$, $2_2$, ...) en forme de bande peuvent se déplacer transversalement les uns par rapport aux autres sur cette longueur.

8.  Dispositif selon la revendication 7,
    **caractérisé en ce que**
    les récipients collecteurs ($2_1$, $2_2$, ...) sont séparés entre eux par des cloisons de séparation ($3_1$, $3_2$, ...) présentant des entailles (8) en forme de cercle primitif dont les rayons ($R_1$, $R_2$, ...) vont en décroissant du récipient collecteur central ($2_7$) vers les récipients collecteurs extérieurs ($2_1$, $2_{12}$), les bords (9) des entailles (8) en forme de cercle primitif reposant sur une surface sphérique commune.

9.  Dispositif selon la revendication 8,
    **caractérisé en ce que**
    la distance entre les cloisons de séparation ($3_1$, $3_2$, ...) est maintenue par des entretoises (15) présentant à chaque fois une ouverture (10) de taille supérieure aux entailles (8) des cloisons de séparation ($3_1$, $3_2$, ...) avoisinantes et qui présente une encoche ( 13) servant à rassembler les quantités collectées éjectées ($A(x_i, y_j)$) par le jet de fluide, et menant à une jonction (11) du capteur associé.

10. Dispositif selon la revendication 8,
    **caractérisé en ce que**
    les cloisons extérieures ($4_1$, $4_2$, ...) des récipients collecteurs extérieurs ($2_1$, $2_{12}$) et les cloisons de séparation ($3_1$, $3_2$, ...) présentent des électrodes (21) afin de faire des mesures capacitives du niveau de remplissage du fluide collecté.

11. Dispositif selon l'une quelconque des revendications 8 à 10,
    **caractérisé en ce que**
    la distance entre les cloisons de séparation ($3_1$, $3_2$, ...) augmente sur les entailles (8), du récipient collecteur central ($2_7$) vers les récipients collecteurs extérieurs ($2_1$, $2_{12}$).

FIG 1

FIG 2

## FIG 3

# FIG 4

# FIG 5

EP 1 046 017 B1

# FIG 6

14

# FIG 7

EP 1 046 017 B1